# EUROPEAN PATENT SPECIFICATION

(11) **EP 3 937 701 B1**
(45) Date of publication and mention of the grant of the patent: **19.11.2025**
(21) Application number: 20714859.4
(22) Date of filing: 09.03.2020
(51) Int. Cl.: A24F 40/40, A24F 40/465, H05B 6/10

(54) **AEROSOL PROVISION DEVICE**
AEROSOLBEREITSTELLUNGSVORRICHTUNG
DISPOSITIF DE FOURNITURE D'AÉROSOL

(30) Priority: 11.03.2019 US 201962816267 P
(43) Date of publication of application: 19.01.2022
(73) Proprietor: Nicoventures Trading Limited, London Greater London WC2R 3LA (GB)
(72) Inventor: THORSEN, Mitchel, Madison, Wisconsin 53718 (US)
(74) Representative: Dehns
(86) International application number: PCT/EP2020/056231
(87) International publication number: WO 2020/182741

(56) References cited:
- EP-A1- 3 367 828
- WO-A1-2017/194769
- WO-A1-2018/178095
- US-A1- 2014 048 083
- US-A1- 2017 055 580
- US-A1- 2017 055 583

## Description

### Technical Field

The present invention relates to an aerosol provision device and an aerosol provision system comprising an aerosol provision device and an article comprising aerosol generating material.

### Background

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine. US 2017/055583 A1 discloses an inductive arrangement wherein a variety of materials may be used as an insulating material between a susceptor and coil; in addition this document describes a device comprising the features mentioned in the preamble of the present claim 1.

### Summary

According to a first aspect of the present disclosure, there is provided an aerosol provision device as claimed in claim 1.

According to a second aspect of the present disclosure, there is provided an aerosol provision system as claimed in claim 13.

Further features and advantages of the invention will become apparent from the following description of preferred embodiments of the invention, given by way of example only, which is made with reference to the accompanying drawings.

### Brief Description of the Drawings

Figure 1 shows a front view of an example of an aerosol provision device;
Figure 2 shows a front view of the aerosol provision device of Figure 1 with an outer cover removed;
Figure 3 shows a cross-sectional view of the aerosol provision device of Figure 1;
Figure 4 shows an exploded view of the aerosol provision device of Figure 2;
Figure 5A shows a cross-sectional view of a heating assembly within an aerosol provision device;
Figure 5B shows a close-up view of a portion of the heating assembly of Figure 5A;
Figure 6 shows a diagrammatic representation of a susceptor, inductor coil and insulating member arrangement; and
Figure 7 shows a perspective view of a susceptor surrounded by an insulating member.

### Detailed Description

As used herein, the term "aerosol generating material" includes materials that provide volatilised components upon heating, typically in the form of an aerosol. Aerosol generating material includes any tobacco-containing material and may, for example, include one or more of tobacco, tobacco derivatives, expanded tobacco, reconstituted tobacco or tobacco substitutes. Aerosol generating material also may include other, non-tobacco, products, which, depending on the product, may or may not contain nicotine. Aerosol generating material may for example be in the form of a solid, a liquid, a gel, a wax or the like. Aerosol generating material may for example also be a combination or a blend of materials. Aerosol generating material may also be known as "smokable material".

Apparatus is known that heats aerosol generating material to volatilise at least one component of the aerosol generating material, typically to form an aerosol which can be inhaled, without burning or combusting the aerosol generating material. Such apparatus is sometimes described as an "aerosol generating device", an "aerosol provision device", a "heat-not-burn device", a "tobacco heating product device" or a "tobacco heating device" or similar. Similarly, there are also so-called e-cigarette devices, which typically vaporise an aerosol generating material in the form of a liquid, which may or may not contain nicotine. The aerosol generating material may be in the form of or be provided as part of a rod, cartridge or cassette or the like which can be inserted into the apparatus. A heater for heating and volatilising the aerosol generating material may be provided as a "permanent" part of the apparatus.

An aerosol provision device can receive an article comprising aerosol generating material for heating. An "article" in this context is a component that includes or contains in use the aerosol generating material, which is heated to volatilise the aerosol generating material, and optionally other components in use. A user may insert the article into the aerosol provision device before it is heated to produce an aerosol, which the user subsequently inhales. The article may be, for example, of a predetermined or specific size that is configured to be placed within a heating chamber of the device which is sized to receive the article.

A first aspect of the present disclosure defines the arrangement of a heater component (such as a susceptor), an insulating member and one or more coils (such as inductor coils). As will be discussed in more detail herein, a susceptor is an electrically conducting object, which is heatable by penetration with a varying magnetic field. The coil is configured to generate the varying magnetic field which causes the susceptor to be heated. An article comprising aerosol generating material can be received within the susceptor. Once heated, the susceptor transfers heat to the aerosol generating material, which releases the aerosol.

The coil may be an inductor coil, and the heater component may be a susceptor.

In the present arrangement, the heater component is surrounded by an insulating member which can be arranged coaxially with the heater component, for example. The insulating member may be positioned away from the outer surface of the heater component to provide an air gap. Extending around the insulating member is a coil. This means that the insulating member is located between the coil and the heater component. In certain arrangements the coil may be in contact with the insulating member. However, in other examples a further air gap may be provided between the insulating member and the coil.

In the above aerosol provision device, the insulating member has a melting point/temperature greater than about 250°C. By having the melting point above 250°C, the structural integrity of the insulating member is retained when the heater component is heated. Preferably, the insulating member has a melting point/temperature above 300°C. In use, the heater component may be heated to a maximum temperature of between about 250°C and about 280°C. Providing an insulating member with a melting point above 300°C ensures that the coil does not melt or soften substantially. In other examples, the maximum temperature of the heater component may be lower or higher.

In some examples the melting point is greater than about 340°C. In some examples the melting point is less than about 350°C. Materials, such as thermoplastics, with even higher melting points can be expensive. Preferably the melting point is about 343°C.

Preferably the insulating member comprises a thermoplastic having the above-mentioned melting points.

The insulating member may comprise a thermoplastic having a glass transition temperature that is greater than about 140°C. It has been found that when the insulating member is positioned away from an outer surface of the heater component by a distance greater than about 2.5mm, such as greater than about 2.75mm, the insulating member is insulated enough by the air gap to ensure that the insulating member remains below the glass transition temperature. The coil, which surrounds the insulating member, is preferably positioned away from an outer surface of the heater component by a distance of between about 3mm and about 4mm. Accordingly, the inner surface of the coil and the outer surface of the heater component may be spaced apart by this distance. These distances may be radial distances. It has been found that distances within this range represent a good balance between the heater component being radially close to the coil to allow efficient heating of the heater component and being radially distant for improved insulation of the induction coil by the insulating member and air gap.

Accordingly, preferably, the insulating member is positioned away from an outer surface of the heater component by a distance of greater than about 2.5mm. Preferably the coil is positioned away from an outer surface of the heater component by a distance of about 3.25mm.

The thermoplastic is polyether ether ketone (PEEK). PEEK has good thermal and electrical insulating properties and is well suited for use in an aerosol provision device. PEEK has a melting point of about 343°C. PEEK has a glass transition temperature of about 143°C. In one example, the thermoplastic is Victrex^{®} PEEK 450G. PEEK also flows easily when in liquid form, so the insulating member can easily be formed via injection moulding. PEEK is also not abrasive, which can damage other components in the device.

In use, the heater component may be heated to a maximum temperature, wherein the maximum temperature is less than the melting point of the insulating member by at least about 60°C. Thus, the difference between the maximum temperature of the heater component and the melting point of the insulating member is preferably greater than 60°C. This difference ensures that the insulating member does not become too hot and begin to soften. In one example, the maximum temperature is about 280°C, for example.

In use, the heater component may be heated to a maximum temperature, wherein the maximum temperature is less than the melting point of the insulating member by at least about 90 °C. In one example, the maximum temperature is about 250°C, for example.

In one example, in use, the heater component may be heated to one of a first temperature and a second temperature, wherein the first temperature is about 250°C and the second temperature is about 280°C, and the melting point is greater than the second temperature by at least about 60°C. The heater component may be heated to the first temperature when the device is operating in a first mode, and the heater component may be heated to the second temperature when the device is operating in a second mode.

The insulating member may have a thermal conductivity of less than about 0.5W/mK. This ensures that the insulating member has good heat insulation properties to insulate components of the device from the heated heater component. Preferably the thermal conductivity is less than about 0.35W/mK. PEEK has a thermal conductivity of about 0.32W/mK.

The insulating member is preferably positioned away from the heater component to provide an air gap around the heater component. As mentioned, the air gap provides insulation. The air gap helps insulate the insulating member from the heat, and together the air gap and insulating member help insulate other components of the device from the heat. For example, the air gap and insulating member reduce any heating of the coil, electronics, and/or battery by the heater component.

The insulating member may have a thickness of between about 0.25mm and about 1mm. For example, the insulating member may have a thickness of less than about 0.7mm, or less than about 0.6mm, or may have a thickness of between about 0.25mm and about 0.75mm, or preferably has a thickness of between about 0.4mm and about 0.6mm, such as about 0.5mm. It has been found that these thicknesses represent a good balance between reducing heating of the insulating member and coil (by making the insulating member thinner to increase the air gap size), and increasing the robustness of the insulating member (by making it thicker).

In certain arrangements the at least one coil, the heater component and the insulating member are coaxial. This arrangement ensures that the heater component is heated effectively, and ensures that the air gap and insulating member provide effective insulation.

As mentioned above, the insulating member may be positioned away from the heater component to provide an air gap. For example, the inner surface of the insulating member is spaced apart from the outer surface of the heater component. This means that an air gap surrounds the outer surface of the heater component, and the heater component is not in contact with the insulating member in this region. Any contact could provide a thermal bridge along which heat could flow. In some examples the ends of the heater component may be connected directly or indirectly to the insulating member. This contact may be sufficiently far away from the main heating region of the heater component so as not to unduly reduce the insulative properties provided by the air gap and insulating member. Alternatively or additionally, this contact may also be over a relatively small area such that any heat transfer to the insulating member by conduction from the heater component is small.

In a particular arrangement the heater component is elongate and defines an axis, such as a longitudinal axis. The insulating member extends around the heater component and the axis in an azimuthal direction. The insulating member is therefore positioned radially outward from the heater component. This radial direction is defined as being perpendicular to the axis of the heater component. Similarly, the coil extends around the insulating member and is positioned radially outwards from both the heater component and the insulating member.

The heater component may be hollow and/or substantially tubular to allow the aerosol generating material to be received within the heater component, such that the heater component surrounds the aerosol generating material. The insulating member may be hollow and/or substantially tubular so that the heater component can be positioned within the insulating member.

The coil may be substantially helical. For example, the coil may be formed from wire, such as Litz wire, which is wound helically around the insulating member.

The heater component may have a thickness between about 0.025mm and about 0.5mm, or between about 0.025mm and about 0.25mm, or between about 0.03mm and about 0.1mm, or between about 0.04mm and about 0.06mm. For example, the heater component may have a thickness of greater than about 0.025mm, or greater than about 0.03mm, or greater than about 0.04mm, or less than about 0.5mm, or less than about 0.25mm, or less than about 0.1mm, or less than about 0.06mm. It has been found that these thicknesses provide a good balance between fast heating of the heater component

(as it is made thinner), and ensuring that the heater component is robust (as it is made thicker).

In an example, the heater component has a thickness of about 0.05mm. This provides a balance between fast and effective heating, and robustness. Such a heater component may be easier to manufacture and assemble as part of an aerosol provision device than other heater components with thinner dimensions.

Reference to the "thickness" of an entity means the average distance between the inner surface of the entity and the outer surface of the entity. Thickness may be measured in a direction perpendicular to the axis of the heater component.

In a particular arrangement of the aerosol provision device, the coil is positioned away from an outer surface of the heater component by a distance of between about 3mm and about 4mm, the insulating member has a thickness of between about 0.25mm and about 1mm, and the heater component has a thickness of between about 0.025mm and about 0.5mm. Such an aerosol provision device allows quick heating of the heater component and effective insulative properties.

In another particular arrangement, the coil may be positioned away from an outer surface of the heater component by a distance of between about 3mm and about 3.5mm, the insulating member has a thickness of between about 0.25mm and about 0.75mm, and the heater component has a thickness of between about 0.04mm and about 0.06mm. Such an aerosol provision device allows improved heating of the heater component and improved insulative properties.

In a further particular arrangement, the coil is positioned away from an outer surface of the heater component by a distance of about 3.25mm, the insulating member has a thickness of about 0.5mm, and the heater component has a thickness of about 0.05mm. Such an aerosol provision device allows efficient heating of the heater component and good insulative properties.

As mentioned, in the second aspect of the present disclosure there is provided an aerosol provision system comprising an aerosol provision device as described above and an article comprising aerosol generating material. The article may be dimensioned to be received within a heater component of the aerosol provision device such that an outer surface of the article is in contact with an inner surface of the heater component. Accordingly, the article may be dimensioned so that it abuts the inner surface of the heater component.

Preferably, the device is a tobacco heating device, also known as a heat-not-burn device.

As briefly mentioned above, in some examples, the coil(s) is/are configured to, in use, cause heating of at least one electrically-conductive heating component/element (also known as a heater component/element), so that heat energy is conductible from the at least one electrically-conductive heating component to aerosol generating material to thereby cause heating of the aerosol generating material.

In some examples, the coil(s) is/are configured to generate, in use, a varying magnetic field for penetrating at least one heating component/element, to thereby cause induction heating and/or magnetic hysteresis heating of the at least one heating component. In such an arrangement, the or each heating component may be termed a "susceptor". A coil that is configured to generate, in use, a varying magnetic field for penetrating at least one electrically-conductive heating component, to thereby cause induction heating of the at least one electrically-conductive heating component, may be termed an "induction coil" or "inductor coil".

The device may include the heating component(s), for example electrically-conductive heating component(s), and the heating component(s) may be suitably located or locatable relative to the coil(s) to enable such heating of the heating component(s). The heating component(s) may be in a fixed position relative to the coil(s). Alternatively, the at least one heating component, for example at least one electrically-conductive heating component, may be included in an article for insertion into a heating zone of the device, wherein the article also comprises the aerosol generating material and is removable from the heating zone after use. Alternatively, both the device and such an article may comprise at least one respective heating component, for example at least one electrically-conductive heating component, and the coil(s) may be to cause heating of the heating component(s) of each of the device and the article when the article is in the heating zone.

In some examples, the coil(s) is/are helical. In some examples, the coil(s) encircles at least a part of a heating zone of the device that is configured to receive aerosol generating material. In some examples, the coil(s) is/are helical coil(s) that encircles at least a part of the heating zone. The heating zone may be a receptacle, shaped to receive the aerosol generating material.

In some examples, the device comprises an electrically-conductive heating component that at least partially surrounds the heating zone, and the coil(s) is/are helical coil(s) that encircles at least a part of the electrically-conductive heating component. In some examples, the electrically-conductive heating component is tubular. In some examples, the coil is an inductor coil.

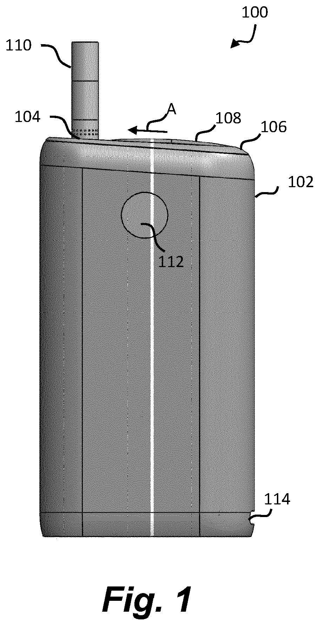

Figure 1 shows an example of an aerosol provision device 100 for generating aerosol from an aerosol generating medium/material. In broad outline, the device 100 may be used to heat a replaceable article 110 comprising the aerosol generating medium, to generate an aerosol or other inhalable medium which is inhaled by a user of the device 100.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heater assembly.

The device 100 of this example comprises a first end member 106 which comprises a lid 108 which is moveable relative to the first end member 106 to close the opening 104 when no article 110 is in place. In Figure 1, the lid 108 is shown in an open configuration, however the cap 108 may move into a closed configuration. For example, a user may cause the lid 108 to slide in the direction of arrow "A".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port. In some examples the socket 114 may be used additionally or alternatively to transfer data between the device 100 and another device, such as a computing device.

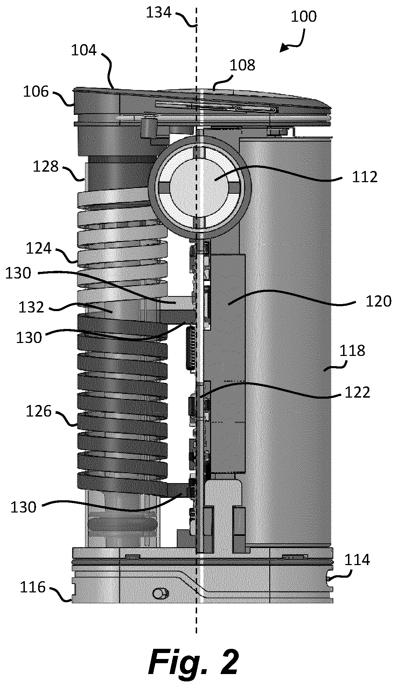

Figure 2 depicts the device 100 of Figure 1 with the outer cover 102 removed and without an article 110 present. The device 100 defines a longitudinal axis 134.

As shown in Figure 2, the first end member 106 is arranged at one end of the device 100 and a second end member 116 is arranged at an opposite end of the device 100. The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. In this example, the lid 108 also defines a portion of a top surface of the device 100.

The end of the device closest to the opening 104 may be known as the proximal end (or mouth end) of the device 100 because, in use, it is closest to the mouth of the user. In use, a user inserts an article 110 into the opening 104, operates the user control 112 to begin heating the aerosol generating material and draws on the aerosol generated in the device. This causes the aerosol to flow through the device 100 along a flow path towards the proximal end of the device 100.

The other end of the device furthest away from the opening 104 may be known as the distal end of the device 100 because, in use, it is the end furthest away from the mouth of the user. As a user draws on the aerosol generated in the device, the aerosol flows away from the distal end of the device 100.

The device 100 further comprises a power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the heating assembly to supply electrical power when required and under control of a controller (not shown) to heat the aerosol generating material. In this example, the battery is connected to a central support 120 which holds the battery 118 in place.

The device further comprises at least one electronics module 122. The electronics module 122 may comprise, for example, a printed circuit board (PCB). The PCB 122 may support at least one controller, such as a processor, and memory. The PCB 122 may also comprise one or more electrical tracks to electrically connect together various electronic components of the device 100. For example, the battery terminals may be electrically connected to the PCB 122 so that power can be distributed throughout the device 100. The socket 114 may also be electrically coupled to the battery via the electrical tracks.

In the example device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application.

The induction heating assembly of the example device 100 comprises a susceptor arrangement 132 (herein referred to as "a susceptor"), a first inductor coil 124 and a second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a rectangular cross section. In other examples the Litz wire can have other shape cross sections, such as circular.

The first inductor coil 124 is configured to generate a first varying magnetic field for heating a first section of the susceptor 132 and the second inductor coil 126 is configured to generate a second varying magnetic field for heating a second section of the susceptor 132. In this example, the first inductor coil 124 is adjacent to the second inductor coil 126 in a direction along the longitudinal axis 134 of the device 100 (that is, the first and second inductor coils 124, 126 to not overlap). The susceptor arrangement 132 may comprise a single susceptor, or two or more separate susceptors. Ends 130 of the first and second inductor coils 124, 126 can be connected to the PCB 122.

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In Figure 2, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the first inductor coil 124 and the second inductor coil 126 are wound in opposite directions. This can be useful when the inductor coils are active at different times. For example, initially, the first inductor coil 124 may be operating to heat a first section of the article 110, and at a later time, the second inductor coil 126 may be operating to heat a second section of the article 110. Winding the coils in opposite directions helps reduce the current induced in the inactive coil when used in conjunction with a particular type of control circuit. In Figure 2, the first inductor coil 124 is a right-hand helix and the second inductor coil 126 is a left-hand helix. However, in another embodiment, the inductor coils 124, 126 may be wound in the same direction, or the first inductor coil 124 may be a left-hand helix and the second inductor coil 126 may be a right-hand helix.

The susceptor 132 of this example is hollow and therefore defines a receptacle within which aerosol generating material is received. For example, the article 110 can be inserted into the susceptor 132. In this example the susceptor 120 is tubular, with a circular cross section.

The device 100 of Figure 2 further comprises an insulating member 128 which may be generally tubular and at least partially surround the susceptor 132. The insulating member 128 may be constructed from any insulating material, such as plastic for example. In this particular example, the insulating member is constructed from polyether ether ketone (PEEK). The insulating member 128 may help insulate the various components of the device 100 from the heat generated in the susceptor 132.

The insulating member 128 can also fully or partially support the first and second inductor coils 124, 126. For example, as shown in Figure 2, the first and second inductor coils 124, 126 are positioned around the insulating member 128 and are in contact with a radially outward surface of the insulating member 128. In some examples the insulating member 128 does not abut the first and second inductor coils 124, 126. For example, a small gap may be present between the outer surface of the insulating member 128 and the inner surface of the first and second inductor coils 124, 126.

In a specific example, the susceptor 132, the insulating member 128, and the first and second inductor coils 124, 126 are coaxial around a central longitudinal axis of the susceptor 132.

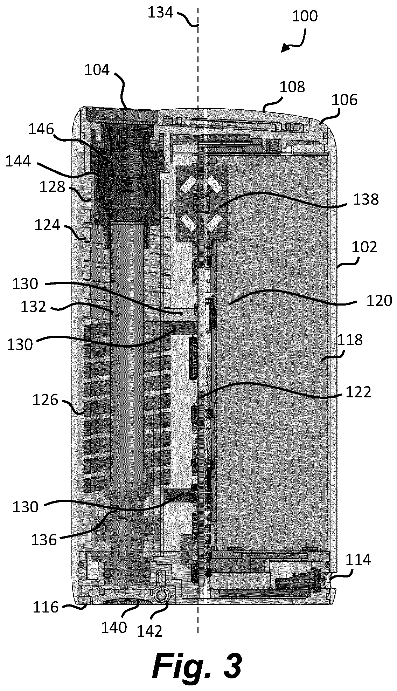

Figure 3 shows a side view of device 100 in partial cross-section. The outer cover 102 is present in this example. The rectangular cross-sectional shape of the first and second inductor coils 124, 126 is more clearly visible.

The device 100 further comprises a support 136 which engages one end of the susceptor 132 to hold the susceptor 132 in place. The support 136 is connected to the second end member 116.

The device may also comprise a second printed circuit board 138 associated within the control element 112.

The device 100 further comprises a second lid/cap 140 and a spring 142, arranged towards the distal end of the device 100. The spring 142 allows the second lid 140 to be opened, to provide access to the susceptor 132. A user may open the second lid 140 to clean the susceptor 132 and/or the support 136.

The device 100 further comprises an expansion chamber 144 which extends away from a proximal end of the susceptor 132 towards the opening 104 of the device. Located at least partially within the expansion chamber 144 is a retention clip 146 to abut and hold the article 110 when received within the device 100. The expansion chamber 144 is connected to the end member 106.

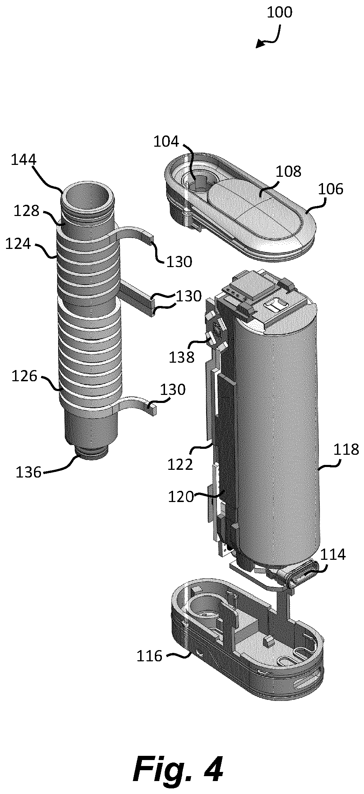

Figure 4 is an exploded view of the device 100 of Figure 1, with the outer cover 102 omitted.

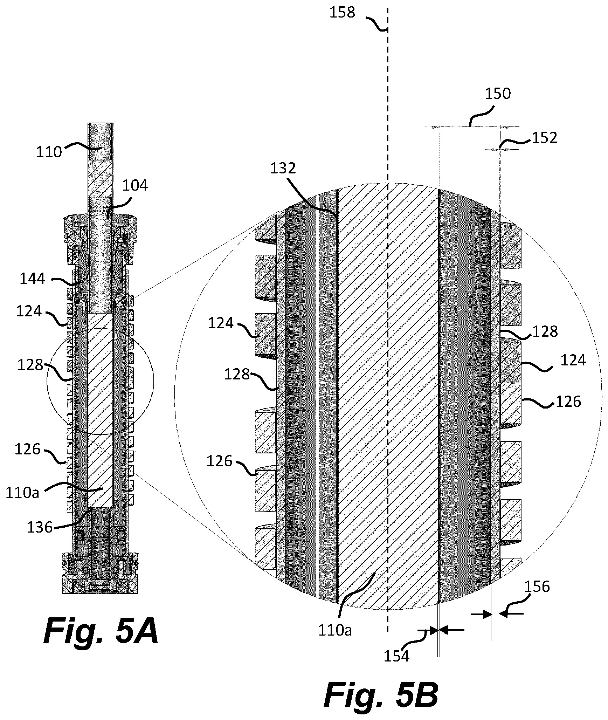

Figure 5A depicts a cross section of a portion of the device 100 of Figure 1. Figure 5B depicts a close-up of a region of Figure 5A. Figures 5A and 5B show the article 110 received within a receptacle provided by the susceptor 132, where the article 110 is dimensioned so that the outer surface of the article 110 abuts the inner surface of the susceptor 132. This ensures that the heating is most efficient. The article 110 of this example comprises aerosol generating material 110a. The aerosol generating material 110a is positioned within the susceptor 132. The article 110 may also comprise other components such as a filter, wrapping materials and/or a cooling structure.

Figure 5B shows a longitudinal axis 158 of the hollow, tubular susceptor 132. The inner and outer surfaces of the susceptor 132 extend around the axis 158 in an azimuthal direction. Surrounding the susceptor 132 is the hollow, tubular insulating member 128. An inner surface of the insulating member 128 is positioned away from the outer surface of the susceptor 132 to provide an air gap between the insulating member 128 and the susceptor 132. The air gap provides insulation from the heat generated in the susceptor 132. Surrounding the insulating member 128 are the inductor coils 124, 126. It will be appreciated that in some examples just one inductor coil may surround the insulating member 128. The inductor coils 124, 126 are helically wrapped around the insulating member, and extend along the axis 158.

Figure 5B shows that the outer surface of the susceptor 132 is spaced apart from the inner surface of the inductor coils 124, 126 by a distance 150, measured in a direction perpendicular to the longitudinal axis 158 of the susceptor 132. In a particular example, the distance 150 is about 3.25mm. The outer surface of the susceptor 132 is the surface that is furthest away from the axis 158. The inner surface of the susceptor 132 is the surface that is closest to the axis 158. The inner surface of the inductor coils 124, 126 is the surface that is closest to the axis 158. The outer surface of the insulating member 128 is the surface that is furthest away from the axis 158.

To achieve the relative spacing between the susceptor 132 and the inductor coils 124, 126, the insulating member 128 can be formed with specific dimensions. The insulating member 128 and susceptor 132 can be held in place by one or more components of the device 100. In the example of Figure 5A, the insulating member 128 and susceptor 132 are held in place at one end by the support 136, and at the other end by the expansion chamber 144. In other examples different components may hold the insulating member 128 and susceptor 132.

Figure 5B further shows that the outer surface of the insulating member 128 is spaced apart from the inner surface of the inductor coils 124, 126 by a distance 152, measured in a direction perpendicular to a longitudinal axis 158 of the susceptor 132. In one particular example, the distance 152 is about 0.05mm. In another example, the distance 152 is substantially 0mm, such that the inductor coils 124, 126 abut and touch the insulating member 128.

In this example, the susceptor 132 has a thickness 154 of about 0.05mm. The thickness of the susceptor 132 is the average distance between the inner surface of the susceptor 132 and the outer surface of the susceptor 132, measured in a direction perpendicular to the axis 158.

In an example, the susceptor 132 has a length of between about 40mm and about 50mm, or between about 40mm and about 45mm. In this particular example, the susceptor 132 has a length of about 44.5mm and can receive an article 110 comprising aerosol generating material, where the aerosol generating material 110a has a length of about 42mm. The length of the aerosol generating material and susceptor 132 is measured in a direction parallel to the axis 158.

In an example, the insulating member 128 has a thickness 156 of between about 0.25mm and about 2mm, or between about 0.25mm and about 1mm. In this particular example, the insulating member has a thickness 156 of about 0.5mm. The thickness 156 of the insulating member 128 is the average distance between the inner surface of the insulating member 128 and the outer surface of the insulating member 128, measured in a direction perpendicular to the axis 158.

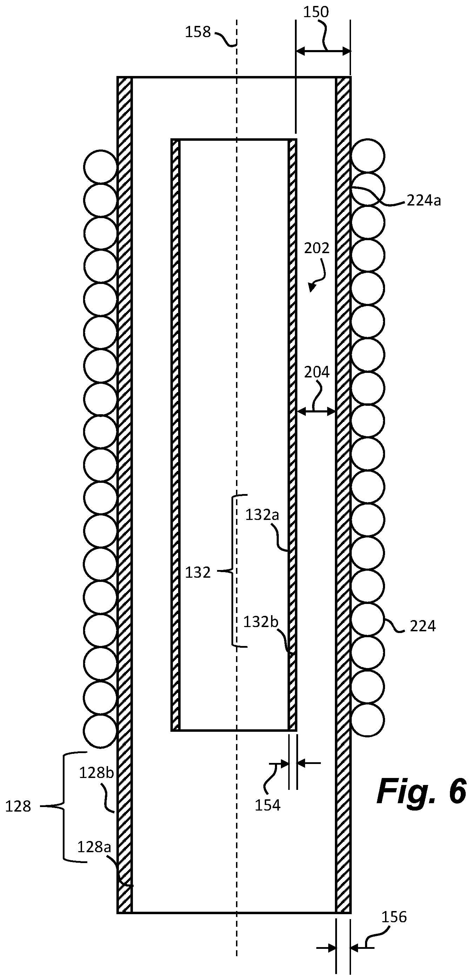

Figure 6 depicts a diagrammatic representation of a cross-section of the susceptor 132 and the insulating member 128 depicted in Figures 5A and 5B. However, in this example, the two inductor coils have been replaced with a single inductor coil 224 for clarity. The inductor coil 224 may be replaced by two or more inductor coils.

The inductor coil 224 is wound around the insulating member 128 and is in contact with the outer surface 128b of the insulating member 128. In another example, they may not be in contact. The inner surface 224a of the inductor coil is therefore positioned away from the outer surface 132b of the susceptor 132 by a distance 150. In this example the wire forming the inductor coil 224 has a circular cross section, although other shaped cross sections may be used. The dimensions indicated in Figure 6 are not shown to scale.

Figure 6 more clearly depicts the thickness 154 of the susceptor 132 as being the distance between the inner surface 132a and the outer surface 132b of the susceptor 132, and the thickness 156 of the insulating member 128 as being the distance between the inner surface 128a and the outer surface 128b of the insulating member 128.

Figure 6 also depicts the air gap 202 having a width 204. The width 204 of the air gap 202 is the distance between the outer surface 132b of the susceptor 132 and the inner surface of the insulating member 128a. The width 204 of the air gap 202 may be greater than about 2.5mm. In this example the width 204 is about 2.75mm.

In the above described examples, the insulating member 128 comprises a thermoplastic having a melting point greater than about 300°C. In this particular example the thermoplastic is PEEK and has a melting point of 343°C. Furthermore, PEEK has a density of around 1.3g/cm³ and has a thermal conductivity of 0.32W/mK. PEEK has been found to be a good material for the insulating member 128 because it provides good thermal insulation, and remains strong when the susceptor 132 is heated to temperatures of between about 250°C and about 280°C. In some examples the susceptor is heated above these temperatures.

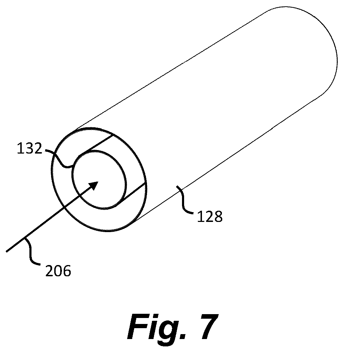

Figure 7 depicts a perspective view the tubular susceptor 132 arranged within, and surrounded by, the insulating member 128. Although both the susceptor 132 and insulating member 128 have a circular shaped cross section, their cross sections may have any other shape, and in some examples may be different to each other. A user can introduce an article 110 into the susceptor 132 by inserting the article 110 in the direction of the arrow 206.

The above embodiments are to be understood as illustrative examples of the invention. It is to be understood in the context of the present disclosure, any feature described in relation to any one embodiment may be used alone, or in combination with other features described, and may also be used in combination with one or more features of any other of the embodiments, or any combination of any other of the embodiments.

## Claims

1. An aerosol provision device (100) comprising:
a heater component (132) configured to receive aerosol generating material (110a);
an insulating member (128) extending around said heater component (132); and
at least one coil (124) extending around the insulating member (128) such that the insulating member (128) is positioned between the at least one coil (124) and the heater component (132), wherein the at least one coil (124) is configured to heat the heater component (132);
***characterised in that*** the insulating member (128) has a melting point greater than 250 °C and comprises polyether ether ketone (PEEK), wherein the insulating member (128) has a length in a direction parallel to a longitudinal axis of the device (100) that is greater than a length of the heater component (132) in the direction parallel to the longitudinal axis of the device (100).

2. An aerosol provision device (100) according to claim 1, wherein the melting point is greater than 300°C.

3. An aerosol provision device (100) according to claim 2, wherein the melting point is greater than 340°C.

4. An aerosol provision device (100) according to any of claims 1 to 3, wherein the heater component (132) is configured to be heated to a maximum temperature in use, wherein the maximum temperature is less than the melting point of the insulating member (128) by at least 60°C.

5. An aerosol provision device (100) according to any of claims 1 to 4, wherein the heater component (132) is configured to be heated to a maximum temperature in use, wherein the maximum temperature is less than the melting point of the insulating member (128) by at least 90 °C.

6. An aerosol provision device (100) according to any of claims 1 to 5, wherein the insulating member (128) has a thermal conductivity of less than 0.5W/mK.

7. An aerosol provision device (100) according to claim 6, wherein the thermal conductivity is less than 0.35W/mK.

8. An aerosol provision device (100) according to any of claims 1 to 7, wherein the insulating member (128) has a thickness of between 0.25mm and 1mm.

9. An aerosol provision device (100) according to any of claims 1 to 8, wherein the insulating member (128) has a thickness of less than 0.7mm.

10. An aerosol provision device (128) according to any of claims 1 to 9, wherein the at least one coil (124), the heater component (132) and the insulating member (128) are coaxial.

11. An aerosol provision device (100) according to any of claims 1 to 10, wherein the insulating member (128) is positioned away from the heater component (132) to provide an air gap (202) around the heater component (132).

12. An aerosol provision device (100) according to claim 11, wherein the insulating member (128) is positioned away from an outer surface of the heater component (132) by a distance of greater than 2.5mm.

13. An aerosol provision system, comprising:
an aerosol provision device (100) according to any of claims 1 to 12; and
an article (110) comprising aerosol generating material (110a).

## Patentansprüche

1. Aerosolbereitstellungsvorrichtung (100), umfassend:
eine Heizkomponente (132), die so konfiguriert ist, dass sie aerosolerzeugendes Material (110a) empfängt;
ein Isolierelement (128), das sich um die Heizkomponente (132) erstreckt; und
mindestens eine Spule (124), die sich um das Isolierelement (128) erstreckt, sodass das Isolierelement (128) zwischen der mindestens einen Spule (124) und der Heizkomponente (132) positioniert ist,
wobei die mindestens eine Spule (124) so konfiguriert ist, dass sie die Heizkomponente (132) erhitzt;
***dadurch gekennzeichnet, dass*** das Isolierelement (128) einen Schmelzpunkt von über 250 °C aufweist und Polyetheretherketon (PEEK) umfasst, wobei das Isolierelement (128) eine Länge in einer Richtung parallel zu der Längsachse der Vorrichtung (100) aufweist, die größer als die Länge der Heizkomponente (132) in der Richtung, die parallel zu der Längsachse der Vorrichtung (100) verläuft, ist.

2. Aerosolbereitstellungsvorrichtung (100) nach Anspruch 1, wobei der Schmelzpunkt größer als 300 °C ist.

3. Aerosolbereitstellungsvorrichtung (100) nach Anspruch 2, wobei der Schmelzpunkt größer als 340 °C ist.

4. Aerosolbereitstellungsvorrichtung (100) nach einem der Ansprüche 1 bis 3, wobei die Heizkomponente (132) so konfiguriert ist, dass sie auf eine maximale Betriebstemperatur erhitzt wird, wobei die maximale Temperatur um mindestens 60 °C niedriger als der Schmelzpunkt des Isolierelements (128) ist.

5. Aerosolbereitstellungsvorrichtung (100) nach einem der Ansprüche 1 bis 4, wobei die Heizkomponente (132) so konfiguriert ist, dass sie auf eine maximale Betriebstemperatur erhitzt wird, wobei die maximale Temperatur um mindestens 90 °C niedriger als der Schmelzpunkt des Isolierelements (128) ist.

6. Aerosolbereitstellungsvorrichtung (100) nach einem der Ansprüche 1 bis 5, wobei das Isolierelement (128) eine Wärmeleitfähigkeit von weniger als 0,5 W/mK aufweist.

7. Aerosolbereitstellungsvorrichtung (100) nach Anspruch 6, wobei die thermische Leitfähigkeit weniger als 0,35 W/mK beträgt.

8. Aerosolbereitstellungsvorrichtung (100) nach einem der Ansprüche 1 bis 7, wobei das Isolierelement (128) eine Dicke von 0,25 mm bis 1 mm aufweist.

9. Aerosolbereitstellungsvorrichtung (100) nach einem der Ansprüche 1 bis 8, wobei das Isolierelement (128) eine Dicke von weniger als 0,7 mm aufweist.

10. Aerosolbereitstellungsvorrichtung (128) nach einem der Ansprüche 1 bis 9, wobei die mindestens eine Spule (124), die Heizkomponente (132) und das Isolierelement (128) koaxial sind.

11. Aerosolbereitstellungsvorrichtung (100) nach einem der Ansprüche 1 bis 10, wobei das Isolierelement (128) von der Heizkomponente (132) weg positioniert ist, um einen Luftspalt (202) um die Heizkomponente (132) bereitzustellen.

12. Aerosolbereitstellungsvorrichtung (100) nach Anspruch 11, wobei das Isolierelement (128) um mehr als 2,5 mm von einer Außenfläche der Heizkomponente (132) entfernt positioniert ist.

13. Aerosolbereitstellungssystem, umfassend:
eine Aerosolbereitstellungsvorrichtung (100) nach einem der Ansprüche 1 bis 12; und
einen Artikel (110), der aerosolerzeugendes Material (110a) umfasst.

## Revendications

1. Dispositif (100) de fourniture d'aérosol comprenant :
un composant chauffant (132) conçu pour recevoir un matériau (110a) générateur d'aérosol ;
un élément isolant (128) s'étendant autour dudit composant chauffant (132) ;
et
au moins une bobine (124) s'étendant autour de l'élément isolant (128) de sorte que l'élément isolant (128) soit positionné entre l'au moins une bobine (124) et le composant chauffant (132),
dans lequel l'au moins une bobine (124) est conçue pour chauffer le composant chauffant (132) ;
**caractérisé en ce que** l'élément isolant (128) présente un point de fusion supérieur à 250 °C et comprend de la polyéther éther cétone (PEEK), dans lequel l'élément isolant (128) présente une longueur dans une direction parallèle à un axe longitudinal du dispositif (100) qui est supérieure à une longueur du composant chauffant (132) dans la direction parallèle à l'axe longitudinal du dispositif (100).

2. Dispositif (100) de fourniture d'aérosol
selon la revendication 1, dans lequel le point de fusion est supérieur à 300 °C.

3. Dispositif (100) de fourniture d'aérosol
selon la revendication 2, dans lequel le point de fusion est supérieur à 340 °C.

4. Dispositif (100) de fourniture d'aérosol
selon l'une quelconque des revendications 1 à 3, dans lequel le composant chauffant (132) est conçu pour être chauffé à une température maximale en utilisation, dans lequel la température maximale est inférieure au point de fusion de l'élément isolant (128) d'au moins 60 °C.

5. Dispositif (100) de fourniture d'aérosol
selon l'une quelconque des revendications 1 à 4, dans lequel le composant chauffant (132) est conçu pour être chauffé à une température maximale en utilisation, dans lequel la température maximale est inférieure au point de fusion de l'élément isolant (128) d'au moins 90 °C.

6. Dispositif (100) de fourniture d'aérosol
selon l'une quelconque des revendications 1 à 5, dans lequel l'élément isolant (128) présente une conductivité thermique inférieure à 0,5 W/mK.

7. Dispositif (100) de fourniture d'aérosol
selon la revendication 6, dans lequel la conductivité thermique est inférieure à 0,35 W/mK.

8. Dispositif (100) de fourniture d'aérosol
selon l'une quelconque des revendications 1 à 7, dans lequel l'élément isolant (128) présente une épaisseur comprise entre 0,25 mm et 1 mm.

9. Dispositif (100) de fourniture d'aérosol
selon l'une quelconque des revendications 1 à 8, dans lequel l'élément isolant (128) présente une épaisseur inférieure à 0,7 mm.

10. Dispositif (128) de fourniture d'aérosol
selon l'une quelconque des revendications 1 à 9, dans lequel l'au moins une bobine (124), le composant chauffant (132) et l'élément isolant (128) sont coaxiaux.

11. Dispositif (100) de fourniture d'aérosol
selon l'une quelconque des revendications 1 à 10, dans lequel l'élément isolant (128) est positionné à distance du composant chauffant (132) pour fournir un espace d'air (202) autour du composant chauffant (132).

12. Dispositif (100) de fourniture d'aérosol
selon la revendication 11, dans lequel l'élément isolant (128) est positionné à distance d'une surface externe du composant chauffant (132) d'une distance supérieure à 2,5 mm.

13. Système de fourniture d'aérosol, comprenant :
un dispositif (100) de fourniture d'aérosol selon l'une quelconque des revendications 1 à 12 ; et
un article (110) comprenant un matériau (110a) générateur d'aérosol.
